**Europäisches Patentamt**

**European Patent Office**

**Office européen des brevets**

(19)

(11) Publication number: **0 027 354**

**A2**

(12) **EUROPEAN PATENT APPLICATION**

(21) Application number: **80303550.0**

(22) Date of filing: **09.10.80**

(51) Int. Cl.³: **H 01 G 9/20**
**H 01 L 31/18**

(30) Priority: **11.10.79 IL 58440**

(43) Date of publication of application:
**22.04.81 Bulletin 81/16**

(84) Designated Contracting States:
**AT BE CH DE FR GB IT LI LU NL SE**

(71) Applicant: **YEDA RESEARCH AND DEVELOPMENT COMPANY, LTD.**
**Weizmann Institute of Science Herzl Street at Yavne Road**
**Rehovot(IL)**

(72) Inventor: **Hodes, Gary**
**Bar Shaul 6**
**Rehovot(IL)**

(72) Inventor: **Manassen Joost**
**Yad Weizmann Gate**
**Rehovot(IL)**

(72) Inventor: **Cahen, David**
**Kipnis 3**
**Rehovot(IL)**

(74) Representative: **Lawrence, Peter Robin Broughton et al,**
**Gill, Jennings & Every 53-64 Chancery Lane**
**London WC2A 1HN(GB)**

(54) **Substrates for semiconductor materials, processes for preparing them and electrodes for photoelectrochemical cells.**

(57) A substrate that may be coated with a chalcogenide semiconductor layer has a surface made of titanium, chromium, alloys containing major portions of either titanium or chromium, and mixtures thereof and is coated with a chalcogenide intermediate layer. The intermediate layer is such that the chalcogenide semiconductor layer may be applied thereon. A process for producing an electrically conductive substrate for supporting a chalcogenide semiconductor layer includes forming a chalcogenide intermediate layer on a substrate having a surface of Cr, Ti, alloys and mixtures thereof. A chromium substrate may support a semiconductor material. The described substrates may be used as electrodes in photoelectrochemical cells.

-1-    YEDA RESEARCH AND
DEVELOPMENT CO. LTD
GJE 6080/207

SUBSTRATES  FOR SEMICONDUCTOR MATERIALS, PROCESSES FOR
PREPARING THEM AND ELECTRODES FOR PHOTOELECTROCHEMICAL
CELLS

The present invention relates to substrate materials to which semiconducting chalcogenide layers may be applied and to a process for forming the substrate. The coated substrates find use in photoelectrochemical cells where they are used as photoelectrodes as well as in photovoltaic and photoconductive applications.

European Applications Nos. 80302300.1 and 80302711.9 disclose  the formation of semiconductor layers on substrates for use in solar cells.

United States Patent 4,064,326 describes a photoelectrochemical cell containing a photoelectrode, storage electrode, counterelectrode, and electrolyte. The photoelectrode comprises, for example, a polycrystalline layer of cadmium selenide which is applied to a suitably conductive substrate.  The use of a titanium substrate for the photoelectrode is disclosed.

An important part of a semiconductor layer-based device is the substrate material.  For a substrate material to be suitable for use as a conducting substrate for semiconductor materials, it should satisfy two main criteria.  First, the semiconductor layer should form a strong physical bond with the substrate, i.e. it should not peel off from the substrate under any anticipated conditions of subsequent treatment and use.  Second, good electrical contact should be established (approaching ohmic as closely as possible) between the substrate and the semiconductor.

Where the semiconductor layer is to be used in a liquid environment, such as for example as a photoelectrode in a photoelectrochemical cell, the substrate materials should be both chemically and electrochemically inert in the solution. Chemical inertness is required to prevent gross dissolution or destruction of the substrate when placed in the liquid environment.

The term "electrochemical inertness" is taken to mean the inertness of the substrate to electrochemical reactions which may occur at the substrate, i.e., that only relatively small currents flow as a result of relatively large changes in potential. Were the substrate itself to be active relative to the liquid, reverse electrochemical reactions could occur, which would have a reverse effect upon the voltage being generated. Such short circuiting could occur through exposed portions of the substrate, such as, for example, at pinholes in the semiconductor layer.

The required characteristics of the substrate are not trivial and only a few substrate materials have been found to satisfy these requirements. Common substrate materials such as Zn and Al for use with n-type chalcogenides and Au for p-type materials are either prohibitively expensive if a large area usage (such as in photovoltaic cells) is envisaged, and/or are unstable in most aqueous media used in most semiconductor-liquid junctions.

The metals of Group IVB and VIB of the periodic table are rarely used as substrates for chalcogenide semiconductors with the exception of Mo for CdS, in which case Mo and CdS have similar thermal expansion coefficients. In an extensive list of ohmic contact to II-VI semiconductors (Heterojunctions and Metal-Semiconductor Junctions; Milnes and Feucht, Academic Press, 1972, pp. 302-305) neither Cr nor unalloyed Ti is mentioned as suitable for use with the semiconductors.

It is, therefore, an object of the invention to provide substrate materials for use with chalcogenide semiconductors which are both chemically and electrochemically inert, and relatively inexpensive.

According to the invention, a substrate adapted to be coated with a chalcogenide semiconductor layer is provided. The substrate comprises a surface selected from the group comprising titanium, chromium, alloys containing major portions, i.e., about 75% or more, of either titanium or chromium, and mixtures thereof. The substrate is coated with an intermediate layer selected from the group comprising an oxide, sulphide, selenide, telluride or mixture thereof. The intermediate layer is adapted such that the chalcogenide semiconductor layer may be applied thereon.

The substrate may consist essentially of Ti, Cr, or mixtures thereof. Alternatively, the surface may be plated onto a different core material.

The intermediate layer has a thickness of about .03 microns to about .3 micron and is generally of a thickness so as to provide a pale yellow to purple coloration. The coated substrate finds particular use as an electrode in a photoelectrochemical cell comprising a liquid electrolyte.

Furthermore, according to the invention, a process is provided for producing an electrically conductive substrate for supporting a chalcogenide semiconductor layer. The process includes forming an intermediate layer selected from the group comprising an oxide, sulphide, selenide or telluride layer on a substrate having a surface selected from the group comprising Cr, Ti, and mixtures thereof.

The intermediate layer may be formed by heating the substrate in an atmosphere containing the compound of the intermediate layer to be applied to the substrate

Thus, an oxide layer may be formed by heating the substrate in an oxygen containing atmosphere until the intermediate layer is formed. Likewise, when desired the substrate may be heated in a sulphur or sulphur compound containing atmosphere to obtain the intermediate layer.

Alternatively, the intermediate layer may be formed by anodizing in a solution providing the necessary anions for building up the intermediate layer.

The semiconductor layer may be annealed at an elevated temperature. The term annealing is taken to mean the heating of the layer to an elevated temperature to bind the chalcogenide to the substrate, and to improve crystallinity.

The semiconductor layer may be annealed in an atmosphere containing a vapor selected from the group comprising $H_2X$, wherein X is a member of the group comprising oxygen, sulphur, selenium or tellurium. Alternatively, the semiconductor layer may be annealed in an atmosphere comprising sulfur, oxygen, selenium or tellurium or mixtures thereof.

In one embodiment, the semiconductor layer is annealed in an inert atmosphere containing water vapor at a temperature of about 600-650°C for about 15 minutes.

The semiconductor layer applied may be a member selected from the group comprising molybdenum, tungsten, cadmium, zinc and mercury chalcogenides and mixtures thereof. Likewise ternary chalcopyrite structure chalcogenides, such as $CuInS_2$ may be used. Semiconductors such as $CdSe$, $CdS$, $CdTe$, $MoS_2$, $WSe_2$ and mixtures thereof are examples of materials which may be used. It should, however, be understood that the invention is not limited as to the semiconductors disclosed and may also include quaternary and penternary compounds such as CdSeTeS.

According to another aspect of the invention, it has been discovered that semiconductors may be applied to chromium substrates. Such substrates may be in the form of solid or chromium plate. The chromium may likewise be in the form of an alloy in which chromium is a major constituent, i.e., more than 75% by weight.

According to the invention, novel electrolytically conductive substrates for semiconducting chalcogenide layers are provided. In a preferred embodiment of the invention, substrates are provided which comprise chromium or titanium. The substrates may be either solid chromium or titanium, or chromium or titanium which have been plated onto a core of another material. The preferred substrates are then provided with a thin surface layer of an oxide, sulphide, selenide or telluride, onto which the semiconductor chalcogenide layer is ultimately applied. The invention is directed to both the process of forming such semiconductor coated substrates as well as to the semiconductor substrates themselves.

As used throughout this specification, the terms "chromium" and "titanium" are taken to include the elemental metals as well as the alloys of these metals with one another and alloys consisting mainly of these metals. Such substrates have been found to be suitable for chalcogenide semiconductors and are particularly preferred for use in photovoltaic devices. According to a most preferred embodiment of the invention, the substrates find particular use as photoelectrodes in chalcogenide electrolytes used in photoelectrochemical cells.

According to the invention, the substrate is first treated to deposit a chalcogenide layer onto the metal substrate prior to the ultimate deposition of the semiconductor. After the semiconductor layer has been applied to the substrate, the coated substrate may be annealed in an atmosphere containing $O_2$ and/or $H_2O$ or $H_2S$ vapor. The atmosphere generally may comprise any vapor selected from the group comprising $H_2X$ (X = O,S,Se,Te). Likewise, elemental chalcogen vapors such oxygen, sulphur, selenium, tellurium and mixtures thereof may be used. If the semiconductor is deposited on a clean substrate, and annealed in the absence of $O_2$ and/or $H_2O$ vapor, the layers have a tendency to peel off the substrate upon annealing. Even where such peeling does not occur, the performance of the layers, when measured as photoelectrode activity in photoelectrochemical cells, is lower than where the substrate has first been treated.

In the case of Cr substrates, the Cr layer may be readily plated as a thin layer on a less expensive substrate. This plating provides an important economic consideration for reducing the cost of the ultimate photovoltaic device.

Ti and Cr are substantially chemically inert and are very electrochemically inactive in many electrolytes such as polysulphide and polyselenide solutions. As a result, these substrates are particularly preferred for use as photoelectrodes in polysulphide and polyselenide solutions since in addition to being chemically inert, their electrochemical inertness prevents local shorting of the photoelectrode via substrate/electrolyte electron exchange which may occur at exposed sites, such as pinholes in the semiconductor layer. Although the invention discloses the use of such substrates with particular preference for photoelectrochemical cells, it is clear that such substrates may be used in conjunction with chalcogenide layers in other applications where demands on physical stability of the semiconductor layer are less severe.

According to one embodiment, the invention provides for a substrate which may be a cleaned bulk metal, e.g., Ti, as well as a thin layer deposited or plated onto the substrate, as, for example, in the case of electroplated Cr on steel. The substrate is heated in an oxygen containing atmosphere until a thin oxide layer forms. The thickness of the layer is most easily characterized by the pale yellow coloration of the layer which is formed. The estimated thickness of this layer is about on the order of 500 angstroms. The oxygen-containing atmosphere is conveniently and simply maintained by passing an inert gas, e.g., argon, through a rubber or plastic tubing, e.g., silicone tubing, which is slightly permeable to oxygen. The percentage of oxygen in the gas stream is typically on the order of about 20-50 ppm and may be controlled by varying the length, and/or the diameter of the permeable tubing. The thickness of the tubing walls will also control the $O_2$ content. The tubing may be surrounded on its outside by $O_2$ although ordinary air is quite suitable as well. The metal is heated to a temperature of about 650°C in the oxygen containing atmosphere for a time sufficient to produce a yellow layer. In the case of Cr a pale yellow layer has been found to provide preferred results while for Ti a deeper yellow to purple coloration has been found to be optimal. Heating times of less then one minute are normally used although longer times at lower temperatures may likewise be used.

The chalcogenide material is applied to the coated substrate by methods such as silkscreen printing, vacuum evaporation, sputtering, and chemical deposition. An annealing step of the type disclosed in European application No. 80302711.9 may be applied to the semiconductor layer. The annealing step is generally carried out in a predominantly inert atmosphere. Nevertheless, the presence of small quantities of $O_2$ in concentrations similar to those described above for the application of the chalcogenide layer by preheating and/or $H_2X$ wherein X is selected from the group comprising oxygen, sulfur, selenium or tellurium, e.g, water vapor, improves the adhesion of the chalcogenide layer to the substrate. Water vapor may be simply introduced by bubbling the gas through water or by inserting a porous, water-soaked plug in the gas line in front of the furnace.

For Cr substrates or substrates plated with Cr the heating time for conditions such as those described above are normally on the order of about 1-3 minutes. Obviously, however, heating time varies as a function of temperature as well as oxygen content. The optimum oxide thickness corresponds to a pale-yellow coloration of the substrate. Subsequent annealing of the chalcogenide layer on the oxidized chromium substrate is best carried out at about 600-650$^{\circ}$C in the presence of water vapor with or without any oxygen added to the gas stream. If the subsequent annealing is carried out in an inert atmosphere free of $O_2$ and/or $H_2O$, the chalcogenide layer will often peel away. The process will result in poorer layers as measured by the efficiencies of photovoltaic devices in which such layers are used.

As noted above, instead of forming specifically oxide layers during the preheating step, other chalcogenide layers (sulphide, selenide, telluride) may be formed. For example, the substrate may be heated in sulphur vapor, or $H_2S$ to form a a yellow to purple sulfide layer. This layer then functions as described above for the oxide layers. The substrate and semiconductor layer may then be annealed in an inert atmosphere containing small concentrations, typically on the order of about 20-50 ppm of chalcogen. These compounds can react with the substrate to form a metal chalcogenide layer.

The resulting substrate with the semiconducting layer thereon not only shows excellent adherence but also withstands mechanical stresses as well as chemical etching.

The invention is best illustrated with reference to the following examples:

1. CdSe on Cr

A 1 cm$^2$ piece of stainless steel, 0.6mm thick, is spot welded to a stainless steel wire (for electrical connection). The steel piece is plated with Cr by normal Cr-plating techniques with the single difference that the plating bath is at room temperature, instead of a warmer temperature, as is usual for bright Cr plating. These conditions result in a matte Cr surface, which is preferable, although not essential, for the subsequent deposition of the semiconducting layer.

The Cr-plated steel is surface-oxidized in an argon stream containing 30 ppm $O_2$ (introduced by using silicone rubber tubing for the gas inlet) at 650°C for 1 minute when a pale yellow layer forms on the metal.

A CdSe layer is applied by painting an aqueous slurry of CdSe (99.999%) + 8% $ZnCl_2$ containing 5% nonionic detergent on the treated substrate.

This layer is then annealed at 640-650°C for 10 minutes in an argon stream, free of $O_2$, but containing $H_2O$ vapor introduced by placing a wet cotton plug in the argon inlet tube.

When tested as a photoelectrode in a photoelectrochemical cell (electrolyte 1M each in KOH,

$Na_2S$ and S), this layer, after 5 seconds etching in 3% Br in ethanol, having a $0.9cm^2$ surface area, produces 6.7 mA photocurrent, 631 mV photovoltage and 423 mV over 90 ohms in 0.95 AM1 simulated sunlight. This corresponds to an efficiency of 2.3%.

When CdSe layer is applied to Cr which had not been preheated, the CdSe peeled off after the annealing step.

2. $CuInS_2$ on Ti

$CuInS_2$ is prepared from the respective elements by heating stoichiometric quantities in an evacuated silica tube at 1150°C for 1 day. The product is ground, and the resultant powder is mixed with 8% $InCl_3$ in a 5% aqueous nonionic detergent mixture to give a smooth paint. This paint is applied to 1 $cm^2$ of Ti substrate which had been treated at 650°C for 40 seconds in an atmosphere of argon containing 20 ppm of $O_2$, which is passed over a water soaked glass wool plug in the gas entry tube. The coated substrate is then annealed for 10 minutes in the same atmosphere and at the same temperature as used in the preheating treatment of the Ti, and then heated for 5 minutes in an atmosphere of 1:2 $H_2$:Ar at 240°C. This layer is etched in 3% $HNO_3$ in HCl for 5 seconds, and tested as in example 1, except that the electrolyte contains 2M $Na_2S$. The output of the cell is 1.1mA short circuit current and 100mV open circuit voltage at 0.83AM1 simulated sunlight.

3. CdS on Ti

A 1 $cm^2$ CdS layer on Ti is prepared as in Example 2, using reagent grade CdS, and $CdCl_2$ (in place of $InCl_3$) in a weight ratio of 50:3. The layer is etched in 1:1 $HCl:H_2$ for 5 seconds, and after rinsing dipped in a 1M $ZnCl_2$ solution. After rinsing with two drops of water it is tested in a photoelectrochemical cell with an electrolyte containing 1M KOH, 1M $Na_2S$ and 0.1M

S. The cell yields a short circuit current of 2.5mA, an open circuit voltage of 500mV and 370mV over, 230 ohms, yielding an optimal power of 0.6mW (0.6% conversion efficiency) under simulated AM1 conditions.

4. $CdSe_{0.65}Te_{0.35}$ on Cr

A 1 cm$^2$ piece of stainless steel is chromium plated as in Example 1, and preheated under the same conditions as in example 1 but for 3 minutes. $CdSe_{0.65}Te_{0.35}$ is prepared by heating CdSe and CdTe powder together in a 65:35 molar ratio, together with 25-30% $CdCl_2$. The mixture is sintered at 650°C for 30 minutes in an argon atmosphere to evaporate off the $CdCl_2$. The resulting powder is ground up, applied to the treated Cr as is the CdSe in Example 1, but using 6% $CdCl_2$ in place of 8% $ZnCl_2$, and annealing under the same conditions as in example 1. After etching for 5 seconds in 3% Br in ethanol, this layer gives, in a photoelectrochemical cell as in Example 1, 8.5 mA photocurrent, 571mV photovoltage and 385mV over 70 ohms. The maximum power is 2.1mW under 0.82AM1 simulated conditions.

5. CdSe on Ti

A piece of cleaned Ti (3x1cm) is heated in an argon stream, passed over molten suphur at 600°C, for 45 seconds. A yellow-purple layer is formed on the Ti. A 1 cm$^2$ CdSe layer is applied to this substrate as in example 1, and annealed as in example 3. After etching in 3% $HNO_3$ in HCl for 5 seconds, this CdSe layer, when tested as a photoelectrode as in example 1, yields 7.2mA photocurrent, 576mV photovoltage and 396mV over 80 ohms corresponding to a power of 1.95 mV and a conversion efficiency of 2.0%.

When a CdSe layer is applied to clean Ti which had not undergone pretreatment, there is a marked tendency for it to peel off the substrate.

6. CdSe

A stainless steel substrate is plated with Cr as in Example 1. The Cr-plated steel is anodized in a 1M $Na_2SO_4$ solution using a Pt counterelectrode at a constant current of 1 $mA/cm^2$ for 3 minutes. The resulting coated Cr is then coated with CdSe and annealed as in Example 1. When tested as a photoelectrode as in Example 1, the cell yields 7.2 $mA/cm^2$ S.C.C., 630 mV O.C.V. and a fill factor of 0.46 with a solar conversion efficiency of 2.4%.

In the invention the intermediate layer is preferably either formed by anodizing, under conditions such as to form the desired oxide or other chalcogenide intermediate layer, or the intermediate layer comprises sulphide, selenide or telluride and is formed, for instance, by heating the substrate in an atmosphere comprising sulphur, selenium or tellurium. The intermediate layer may also be formed by heating in an atmosphere comprising $H_2X$ where X is selected from sulphur, oxygen, selenium, tellurium and mixtures thereof.

After the semiconductor layer has been applied on the intermediate layer the product is preferably annealed. Annealing may be conducted in the presence of, for instance, hydrogen or oxygen but preferably is conducted in an atmosphere comprising $H_2X$ where X is selected from sulphur, oxygen, selenium and tellurium, for instance in an atmosphere comprising water vapour.

In the aspect of the invention comprising chromium substrate having a semiconductor mounted on the substrate the semiconductor layer is preferably a layer of CdSe, CdS, CdTe, $MoS_2$ or $WSe_2$ and in particular is preferably not CdSeTe.

Coated substrates according to the invention may of course be subjected to optional post treatments. For instance the semiconductor layer may be treated with a solution of a zinc salt, this has the effect of improving its efficiency.

The invention includes not only the various substrates and coated substrates defined above but also photoelectrochemical cells comprising any of these as electrode, and also photoelectric cells comprising an electrode having a chromium substrate. This substrate may comprise a chromium surface plated on a non-chromium core. The substrate may comprise a major amount of chromium.

- 14 -

## Claims

1. A substrate that may be coated with a chalcogenide semiconductor layer characterised in that the substrate comprises a surface selected from titanium, chromium, alloys containing a major proportion of either titanium or chromium, and mixtures thereof and in which the substrate has a coating of a chalcogenide intermediate layer comprising oxide, sulphide, selenide or telluride and which is such that the chalcogenide semiconductor layer may be applied thereon.

2. A substrate according to claim 1 characterised in that the intermediate layer has a thickness of about 0.03 to 0.3 microns.

3. A substrate according to claim 1 or claim 2 characterised in that the intermediate layer is a layer that has been formed by anodizing the surface of the substrate or is a layer comprising sulphide, selenide or telluride.

4. A substrate according to any preceding claim characterised in that the chalcogenide intermediate layer is coated with the chalcogenide semiconductor layer.

5. A process for producing an electrically conductive substrate that may support a chalcogenide semiconductor layer characterised in that the substrate has a surface selected from titanium, chromium, alloys containing a major portion of either titanium of chromium, and mixtures thereof and in which an intermediate layer comprising oxide, sulphide, selenide or telluride is formed on the substrate.

6.       A process according to claim 5 characterised in that the intermediate layer is formed by anodizing the substrate or by heating the substrate in an atmosphere comprising sulphur, selenium or tellurium.

7.       A process according to claim 5 or claim 6 characterised in that it comprises the additional step of applying the semiconductor layer over the intermediate layer.

8.       A process according to claim 7 characterised in that the semiconductor layer is annealed by heating the chalcogenide layer at an elevated temperature.

9.       A process according to claim 8 characterised in that the annealing is conducted by heating at an elevated temperature in an atmosphere comprising $H_2X$ wherein X is selected from sulphur, oxygen, selenium and tellurium.

10.       A process according to claim 8 characterised in that the annealing is conducted by heating the semiconductor layer in an inert atmosphere containing water vapour at a temperature of about 600 - 650$^{\circ}$C for about 5 to 15 minutes.

11.       A substrate according to claim 4 or a process according to any of claims 7 to 11 characterised in that the semiconductor layer is selected from CdSe, $CuInS_2$ CdS, or CdTe or mixtures thereof.

12.       A photoelectrochemical cell comprising an electrode characterised in that the electrode comprises a substrate selected from substrates according to any of claims 1 to 4 or made by a process according to any of claims 5 to 11.

13.       A substrate carrying a semiconductor characterised in that the substrate surface is formed of chromium or an alloy containing a major amount of chromium.

14.       A substrate according to claim 13 characterised in that the semiconductor is not of CdSeTe.

15.       A photoelectrochemical cell comprising an electrode characterised in that the electrode comprises a substrate selected from chromium substrates and substrates according to claim 13 or claim 14.